# EUROPEAN PATENT SPECIFICATION

(11) **EP 4 519 814 B1**
(45) Date of publication and mention of the grant of the patent: **15.04.2026**
(21) Application number: 24740900.6
(22) Date of filing: 09.07.2024
(51) Int. Cl.: G06Q 10/20, G06Q 50/08

(54) **METHOD AND SYSTEM**
VERFAHREN UND SYSTEM
PROCÉDÉ ET SYSTÈME

(30) Priority: 10.07.2023 GB 202310582
(43) Date of publication of application: 12.03.2025
(73) Proprietor: Planna Limited, London W6 7JP (GB)
(72) Inventor: Hanash, Alain, London, Greater London WC2B 6YF (GB); Williams, Brooke, London, Greater London WC2B 6YF (GB); Yamani, Sharaf, London, Greater London WC2B 6YF (GB)
(74) Representative: Murgitroyd & Company
(86) International application number: PCT/EP2024/069410
(87) International publication number: WO 2025/012292

(56) References cited:
- MAHEYSH V ET AL: "CNN-Based Detection of Cracks and Moulds in Buildings", 4TH INTERNATIONAL CONFERENCE ON MOBILE COMPUTING AND SUSTAINABLE INFORMATICS (ICMCSI 2023); 11-12 JAN. 2023; KIRTIPUR, NEPAL; LECTURE NOTES ON DATA ENGINEERING AND COMMUNICATIONS TECHNOLOGIES ; ISSN 2367-4520,, vol. 166, 11 June 2023 (2023-06-11), pages 729 - 744, XP009557326, ISBN: 978-981-99-0835-6, [retrieved on 20230527], DOI: 10.1007/978-981-99-0835-6_52

## Description

### FIELD

The invention relates to a method and system. Particularly, but not exclusively, the invention relates to a computer implemented method and system. Further particularly, but not exclusively, the invention relates a computer implemented method of processing input content associated with a user profile.

### BACKGROUND

Problems with a property can go unnoticed for a long time and lead to long-term problems with that property. Issues such as mould and damp can start from a position where they are straightforward to address and then later, if left unchecked, can become much larger problems which can influence the structure of the property and the well-being of tenants and owners.

Delays in diagnosing problems in a structure can lead to further damage to that structure and can also compromise the health and safety of those inhabiting the structure. For instance, mould can lead to respiratory problems for individuals who inhabit properties where mould is prevalent.

Furthermore, there is a barrier between inhabitants of properties and the sort of instruction which needs to be provided to third parties when maintenance on a property needs to be implemented to ensure the maintenance is effective.

MAHEYSH V ET AL "CNN-Based Detection of Cracks and Mould in Buildings", 4th International Conference on Mobile Computing and Sustainable Informatics (ICMCSI 2023), Lecture Notes on Data Engineering and Communications Technologies ISSN 2367-4520, vol. 166, pages 729-744, XP009557326, DOl: 10.1007/978-981-99-0835-6_52, ISBN: 978-981-99-0835-6 relates to the detection of cracks and mould in buildings using convolutional neural networks.

Aspects and embodiments were conceived with the foregoing in mind.

### SUMMARY

Viewed from a first aspect, there is provided a computer-implemented method of obtaining content to be associated with a user profile associated with at least one user, the method implemented by a processing resource, the method comprising receiving input via a user interface, the input comprising input content associated with a building; characterised in that the method comprises: retrieving information associated with the building and the user, wherein the information associated with the building comprises information associated with the surrounding location and environment of the building; augmenting the input content associated with the building with the information associated with the building and the user, using the augmented input content to generate a prompt representing the input content; providing the prompt to a trained model to generate response content; augmenting the response content with externally sourced information related to the response content to generate augmented response content; associating the augmented response content with the user profile associated with the user.

A method in accordance with the first aspect enables a user to provide user content, such as a phrase, which relates to a building e.g. how do I fix my boiler and obtain response content (i.e. content provided in response to the query) which is automatically curated to be inclusive of the specific circumstances surrounding the building. This reduces the number of user inputs which are necessary to obtain a useful response, particularly given the response content is also augmented to add, for example, third party contact details.

The augmented response content may be stored in a data structure in association with the user profile. The data structure may be any suitable data structure which can be utilised by the processing resource. For example, the data structure may comprise a JSON object or file.

The method may further comprise formatting the augmented response content for display on a computing device. This may include rendering the augmented response content in any suitable format. The method may further comprise displaying the augmented response content on a computing device.

Augmenting the response content may comprise retrieving contact details for a third party and a link may provided to enable a communication to be transmitted to the third party. The link may be a selectable link which, when selected, initialises a user interface for a communication medium such as a messaging application. The contact details may be used to populate the fields of the user interface.

The method may further comprise automatically transmitting a message to the third party, wherein the message comprises the augmented response content. This may be responsive to the response content indicating an emergency situation such as a gas leek, for example.

The method may further comprise determining, from a feed of data associated with the environment and location of the building, a change in the conditions around the building. This change may, for instance, indicate changing weather conditions. If previous interactions indicate a leaky roof can be associated with the building then increased rain may be identified as a potential source of further problems. This may lead to the processing resource generating an alert based on the change in conditions. The method may then further comprise transmitting the alert to a computing device. The alert may notify the user of the potential problem. The alert may associated with the input content associated with the building.

The input may comprise any one or more than one of text content or other multimedia content. The text content may be determined based on multimedia input.

The multimedia input may be processed using a trained model to determine a problem with the building; wherein the text content is generated using the trained model and the text content is representative of the problem with the building.

The text content may be generated based on audio input received through a computing device, wherein the audio input is converted to a phrase and the text content comprises the phrase.

Receiving input may comprise selection of a query phrase from a plurality of query phrases provided via the user interface. That is to say, input may comprise the user identifying a query phrase (which may be a question) which has been generated based on their previous history with the user interface and the processing resource. Alternatively, the most commonly asked questions may also be provided. The most commonly asked questions may be provided based on the interactions of all users who are accessing the user interface with input content.

The plurality of query phrases may be automatically generated based on previous user interaction.

The query phrase may be generated based on location information and/or environment information associated with the building. That is to say, location information and/or environment information may indicate there is a specific problem in the location (i.e. heavy rain) and this will generate query phrases related to heavy rain such as "What do I do if I have water coming through the ceiling?"

The information associated with the building may comprise information relating to at least one of: the building type; previous maintenance history; location information.

The information associated with the user may comprise information relating to at least one of: demographic information, expertise of the user and indicate levels of affordability.

The augmentation of the response content may be based on information about the building and/or the user. This means that the response content can be adjusted using information which is relevant to the building or the user or both. For example, if the response content is a series of steps which instructs the user how to switch off their boiler and the user information indicates that user does not speak English, then instructions in the relevant language can be provided.

The method may further comprise processing the augmented response content to identify correspondence with functionality of an Internet-of-Things device. The method may further comprises generating a command to that Internet-of-Things device and transmitting the command to the Internet-of-Things device. For example, if the issue is determined to be a gas leak, a command may be transmitted to a gas supply valve with a command to switch off the gas.

Therefore it may be said that the aspects provide a system which generates a set of recommendations for maintaining and/or improving works to a building based on inputs from multiple sources of information which include photographs, user queries, building data, weather information etc. These recommendations include step-by-step instructions on tackling an identified problem or task, the products and tool needed to complete the specified work and recommended professional to assist and support the user if necessary.

The method in accordance with the first aspect may recognise a particular issue in a building from various inputs and generate an action plan accordingly.

The method provides for processing of input in text or voice form which are pre-processed and fed into one or more trained models (e.g. a large language model), and the output from those models is then post-processed and formatted in a structured manner.

The pre-processing may comprise prompt engineering where the initial user input is enhanced with additional information (e.g. building type, maintenance history and existing issues, location, level of expertise, affordability etc)

The processing of the prompt using the trained model comprises the analysis of photograph and prompts to create specific actions plans, generate product recommendations, priving information, expert recommendations etc.

The output from the trained model can then be post-processed to create enhanced action plans which are then presented to the user in a structured and organised manner along with specific step-by-step tasks and links to recommended products.

When a user completes a task on the action plan, they can provide input to indicate a successful action completion. The action plan can then be used in future recommendations.

The inputs to the trained models may comprise text/photographs, photographs, user behaviour and building data. The outputs provided to the user may comprise activity plans with step-by-step tasks and instructions (where applicable), product and tool recommendations, recommendations of local or remote experts/contractors, associated costs, difficulty level, time to complete and other relevant information.

Viewed from another aspect, there is provided a computer-implemented method of recording data in a user profile associated with a building. The user profile may comprise data fields which comprise both personal information associated with a user and building information associated with a building. The method may be implemented by a processing resource. The processing resource may be any resource which can provide processing capacity. The processing resource may be software or hardware implemented. The method may comprise initialising a trained model and training the trained model based on a context associated with buildings. The trained model may comprise one or more combinations of artificial neural network, convolutional neural network, large language models or any other suitable type of trained model. The training may be implemented using any suitable supervised or unsupervised learning technique. The context associated with buildings may draw on any combination of location data, property data, environmental data, occupancy data or any other suitable data source. The method may further comprise receiving input comprising a query associated with a building. The input may be via a chat interface or based on an image processed through a neural network to generate a text based output. The query may be text-based and may be received through a chat interface or as the output from a neural network which has identified a fault in the building based on an image. The method may further comprise utilising the trained model to generate a response to the query, wherein the response is generated based on external data sources and data associated with the building is retrieved from the external data sources. The external data sources may comprise any one of occupancy data for the building, environmental data, location data, weather data or any other suitable data source. The response may be recorded in a user profile. The response may, for example, be recorded in a timeline format.

A method in accordance with this aspect enables a user who has a problem with a building to establish what the problem is with that building via a computing device which can receive input (in the form, for example, of an image) which is then processed to identify a problem with a building and which is then used as the basis for a query to a trained model. The trained model utilises external data sources to generate a response which is specific to the environment and location of the property.

The trained model may be a large language model. An example of a large language model is ChatGPT but other examples include BERT, LAMBDA, PaLM, LLaMA and proprietary large language models which are trained specifically on a building context.

The method may further comprise processing the generated response to identify a third party and contact information for the third party. The method may further comprise identifying the third party in a user interface on a computing device. The method may further comprise receiving input to initialise communication with the third party.

The effect of this is that communication with a third party may be automatically initiated when the problem and maintenance is diagnosed. The third party may be identified based on proximity to the building and may be identified as the response to a search query which utilises search terms provided by a trained model.

The method may further comprise providing a notification of the response to a computing device. The notification may take the form of a notification via an application, an email or a text message and may comprise an identification of a fault in the building and/or a maintenance plan and/or a third party and/or contact details for a third party.

The method of Claim 1, wherein the trained model comprises an expert system which may comprise a knowledge base of property information and data.

The external data sources may comprise at least one of: location data, occupancy data, environmental data, weather data, buildings data and maintenance data.

### DESCRIPTION

An embodiment will now be described by way of example only and with reference to the following drawings in which:
Figure 1 is a schematic illustration of system in accordance with an embodiment;
Figure 2 is a schematic illustration of a fault identification neural network in accordance with an embodiment;
Figure 3 is a schematic illustration of a notification generation module in accordance with an embodiment;
Figure 4 is a flow chart detailing how a fault in a structure can be identified in accordance with an embodiment;
Figure 4a is an illustration of an image which may be input to a system in accordance with the embodiment;
Figure 4b is an illustration of an image which may be output from a system in accordance with the embodiment;

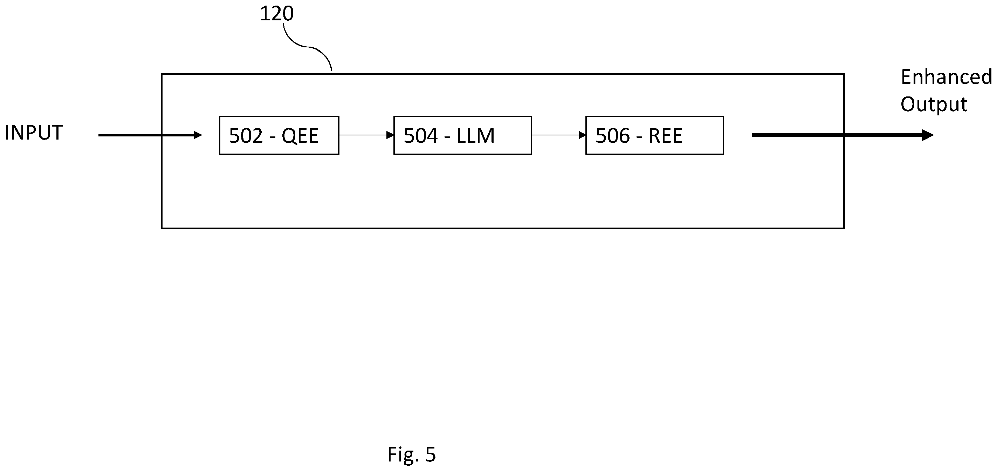

Figure 5 is a schematic illustration of a system for providing response content in accordance with the embodiment;

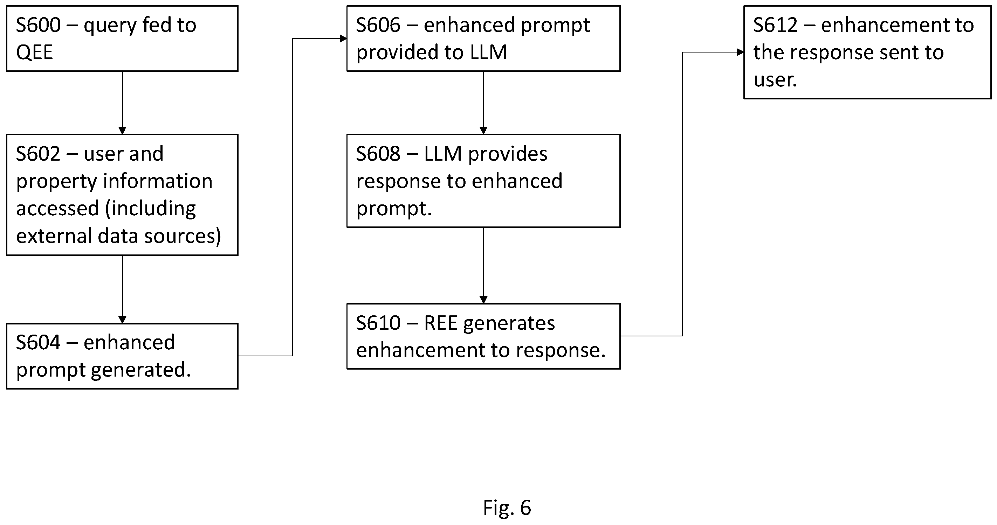

Figure 6 is a flow chart indicating how a query is processed and augmented by the system in accordance with the embodiment;
Figure 7 is an example of a user interface provided by the system in accordance with the embodiment;
Figure 8 shows a user interface which shows pre-generated questions for the user to select from in accordance with the embodiment;
Figure 9 is an example of a response from the system in accordance with the embodiment;
Figure 10 is an example of a response from the system in accordance with the embodiment; and
Figure 11 is an example of a response from the system in accordance with the embodiment.

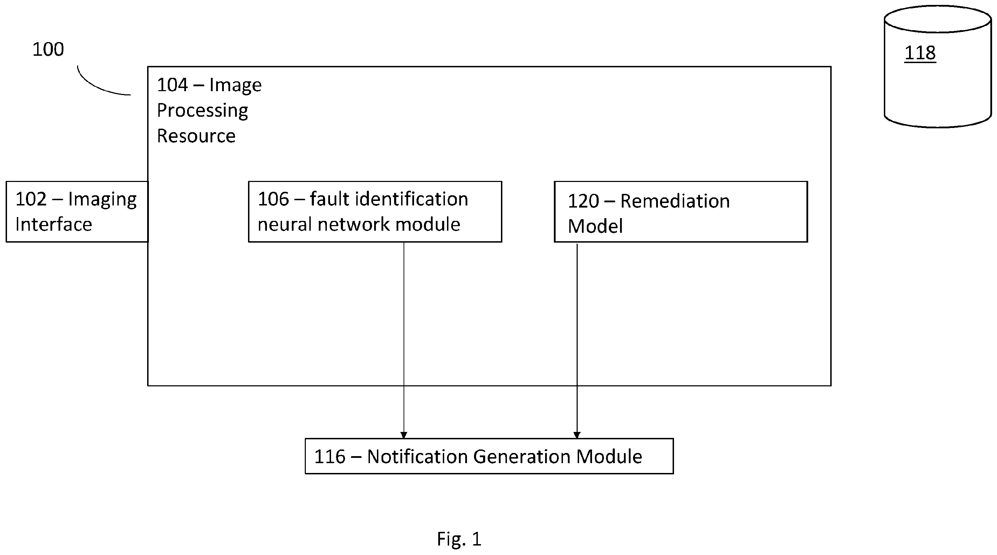

We now describe, with reference to Figure 1, a first embodiment of a system 100 which may be used to identify a fault in a structure. Data may then be generated which can be used in the remediation of the fault and this data can be recorded in a user profile of a user associated with the system 100. In this example, an image is used to generate a response from the system which updates the user profile and then is used to initiate communications from a user profile. In another example, we will discuss how a chat interface can be provided which can be used to initiate communication from a user profile.

The user profile of a user may be stored in any suitable storage 118 with other user profiles of users of the system 100. The user profiles may be stored using a suitable database and may be related using a suitable relational database structure to a property database which stores details of the property which they inhabit.

The user database stores the user's name, address and telephone number and is related to the property database using a suitable key. The user database may also store information relating to specific working patterns of the user and other specific needs, such as medical information. In some embodiments, a user record may be related to more than one property. The property database stores details about the property which will be discussed in further detail below. These details may comprise occupancy data, building data, location data, environmental data and data relating to the previous maintenance.

The user profile also includes a data structure which records data related to work and maintenance which has been carried out on the associated properties. Such a data structure may store a suitable construct such as a timeline, for example, which stores the jobs and other information sequentially. This will be discussed in further detail below

The system 100 comprises an image interface 102 and an image processing resource 104 which will now be described in more detail. The system 100 may form part of a mobile computing device such as a mobile telephone or, alternatively, the system may be cloud located or located remotely to a mobile telephone. That is to say, the system 100 may be implemented on a mobile computing device or other computing device. The trained data model may be selected based on which mobile computing device is to be used to implement the trained data model.

The image interface 102 is configured to receive images captured from an imaging device such as, for example, a camera and to convert that image into a format suitable for input into a fault identification neural network module 106. The image interface 102 is also configured to retrieve metadata associated with the captured image.

By converting the image into a format suitable for input into a fault identification neural network module 106, the imaging interface maps each pixel in the image to a matrix where each pixel is represented in the matrix by a pixel value which forms a numerical representation of each pixel. In mapping the image to a matrix of pixel values, the image is converted into a form in which it can be processed by a convolutional neural network (CNN) such as fault identification neural network 106. This will be described in more detail below.

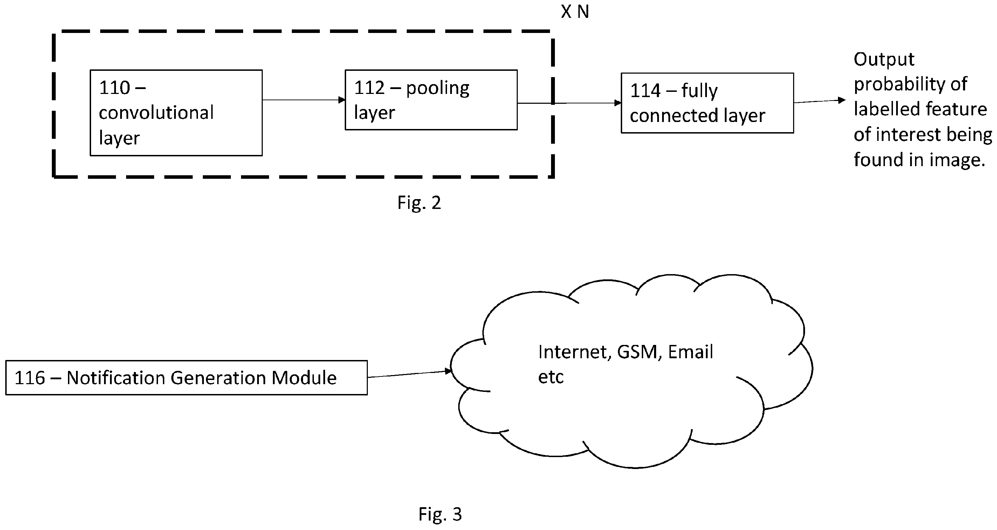

The fault identification neural network 106 is illustrated in Figure 2. The fault identification neural network comprises a convolutional neural networks (CNN) which comprises at least a convolutional layer 110, a pooling layer 112 and a fully connected layer 114. The convolutional layer 110 receives the matrix of pixel values as an input and is configured to apply a kernel matrix to the input image to implement a feature map onto the matrix of pixel values. The pooling layer 112 applies maximum pooling to the output of the convolutional layer 110. The output from the pooling layer 112 may then be output to a further layer where a subsequent convolutional layer 110 receives the output from the pooling layer (before generating a further output) and then another pooling layer is applied to the further output. That is to say, multiple convolutional and pooling layers may be deployed where a pooling layer provides the input to the subsequent convolutional layer. This may be repeated N times where N can be selected based on the processing capacity of the device which is being used to implement the trained model.

This repeated succession of convolutional and pooling layers implements a deep learning convolutional neural network. The repetition of the convolutional and pooling layers may be repeated many many times, e.g. N= 50, to enable the convolutional output from the final pooling layer to contain information regarding specific objects in the captured image. The output from the final pooling layer may then be input to the fully connected layer 114.

The fully connected layer 114 then deploys a multilayer perceptron comprising an input layer, at least one hidden layer and an output layer. The output from the pooling layer 112 is provided as input to the fully connected layer 114 where weights and biases are applied to determine an output prediction in the form of a probability that an image contains a feature of interest (e.g. discolouration). The feature of interest can then be associated by the fault identification neural network module 106 with a fault type such as, for example, water damage.

That is to say, the fully connected layer 114 acts as a classification layer for the input image in that it provides an output probability that the image depicts certain features, i.e. features of interest, using the data provided by the succession of convolutional and pooling layers which make up the fault identification neural network 106. The features can then be associated with a fault type.

The convolutional neural network provided by convolutional layer 110, pooling layer 112 and fully connected layer 114 is trained on images of specific faults which can occur in a building. We will now describe the training process in more detail.

The training of the convolutional layer 110, pooling layer 112 (and subsequent iterations thereof) and the fully connected layer 114 is initialised by obtaining a plurality of images of buildings and faults within those buildings. Experts in the different faults in buildings may be used to categorise faults into different fault types and also to identify which features of interest may be present in an image which could be associated with those fault types. The next step is identifying within those images the presence of features of interest which indicate a fault type in the building illustrated in the image. The feature of interest can then be identified with a label. For example, if an image shows discolouration on a wall inside a building then this can be marked with a label "discolouration". In another example, the presence of mould spots on a wall can be labelled with "mould spots". This process can be repeated for all features which can be found in an image which are indicative of a type of damage being present within a building. Whilst here we talk about examples which relate to discolouration and water damage, it should be emphasised that is for illustration only and should not be taken to limit the subject matter.

A suitable output from the fully connected layer 114 can then be designated for each of the images. In the example of discolouration, the output can be identified as "mildew". In the example of "mould spots" then the output can be identified as "damp". This is because discolouration on walls is indicative of mildew and mould spots on a wall can be indicative of damp. That is to say, the output can be associated with a fault in a building or a type of damage in the building. In another example, a deformed gutter, as a feature of interest which may be present in a captured image, may then be associated with an output "gutter damage" which is a fault type in a building.

This process can then be repeated for images showing a plurality of features of interest which indicate the presence of a mould type. Similarly, it can be repeated for all features of interest which can be identified in an image which can then be associated with a fault type. A suitable output can then be designated for each of the features of interest. It is possible that multiple features of interest may be labelled in the same image and each may be assigned a different fault type.

Forward/backward propagation can then be deployed to optimise the parameters, weights and biases of the convolutional layers, the pooling layers and the fully connected layer. That is to say, the labelling of the feature of interest and the corresponding output (i.e. fault type) is used to train the convolutional neural network to identify and/or diagnose fault types based on an image taken at a building.

The fault identification neural network 106 can be trained on both interior and exterior images to enable it to be trained to identify both interior and exterior fault types.

The use of multiple convolutional and pooling layers means that the fault identification neural network 106 can be used to identify many different features in an image, including both mildew and discolouration in the same image. The training process described here will optimise the parameters of the kernel matrix, the pooling layer and the weights and biases in the fully connected layer to identify the parts of image which contain those features, i.e. the features of interest.

The labelling of the images and the identification of the fault types which correspond to the features of interest is with the assistance of trained professionals who work in the areas of damproofing, decoration and other relevant industries.

As part of the same fault identification neural network module 106, further layers (i.e. of convolution and pooling) may be used to identify objects commonly found in the interior or exterior of a building such as, for example, windows, window sills, doors and roofing. Similar training may be deployed to identify these features to the fault identification neural network 106. Optionally, a separate neural network may be trained to identify these features (i.e. objects commonly found in the interior or exterior or a building) in an image provided to the fault identification neural network module 106.

Examples of these commonly found objects are the type of building (e.g. a house or an apartment), types of windows (e.g. a bay window or a sash window), type of front door (e.g. composite front door), plumbing features (e.g. downpipe), positional characteristics (e.g. end of terrace or semi-detached), roof geometry (e.g. flat roof), door types (e.g. folding doors) and the presence of surrounding trees (e.g. large tree, beech tree)

Following training of the convolutional neural networks, they can be used to classify new images and group objects or defects together based on their predicted categories. In one example, if a model was used to classify objects or defects found in a front elevation of a property, it is used to predict categories and to group similar defects together to identify patterns or trends which may indicate a problem with the building.

In practical terms, a suitable convolutional neural network implementation would be ResNet-50 where the convolutional and pooling layers are repeated 50 times. Such an implementation would be trained on the images as described above.

Although the example described uses an example of a CNN, other forms of trained data model could also be utilised to identify fault types in a building based on features of interest found in content provided to the model. The trained model may additionally or alternatively comprise combinations of one or more of R-CNN, Fast R-CNN, Faster R-CNN, YOLO, SSD, RetinaNet, EfficientNet or any other suitable implementation.

These models may be selected based on their respective strengths and/or weaknesses but additionally because of the computational resources which may be available. For example, a model which requires fewer computational resources may be selected if the model is intended to be implemented using a mobile computing device.

Substantial speed-up can, for example, be obtained using Fast R-CNN as the same CNN is used to classify objects and propose regions in an image which contain features of interest. It is faster than R-CNN which generates region proposals and then utilises a CNN to classify objects within those regions. The use of R-CNN reduces the number of regional proposals required for object detection during training.

Further speed can be obtained using Faster R-CNN which utilises a region proposal network to share convolutional features with the detection network.

YOLO may be deployed where speed is required but small objects (or objects which are close together) are not likely to be present in a captured image. This is because the image is processed in a single pass to identify objects. However, given the computationally intensive nature of YOLO it may not be suitable for mobile computing devices but may be suitable for cloud implementations.

SSD is an improvement on YOLO in the sense it can be effective at detecting objects in an image which are at different scales.

RetinaNet may be selected if it is suspected that there may be a training dataset which may exhibit foreground and background imbalance.

EfficientDet is accepted to be more efficient at object detection in an image and so may be utilised where computational resources are limited.

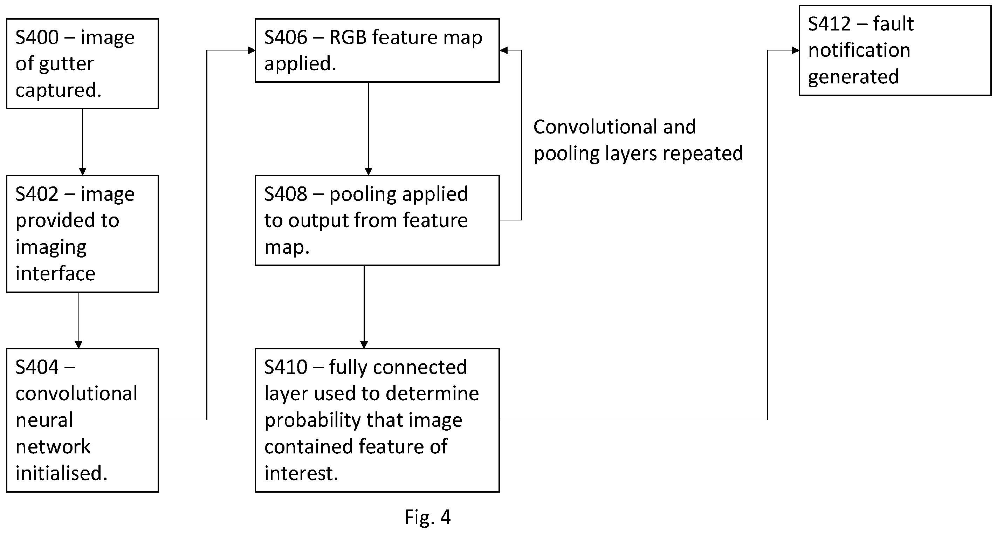

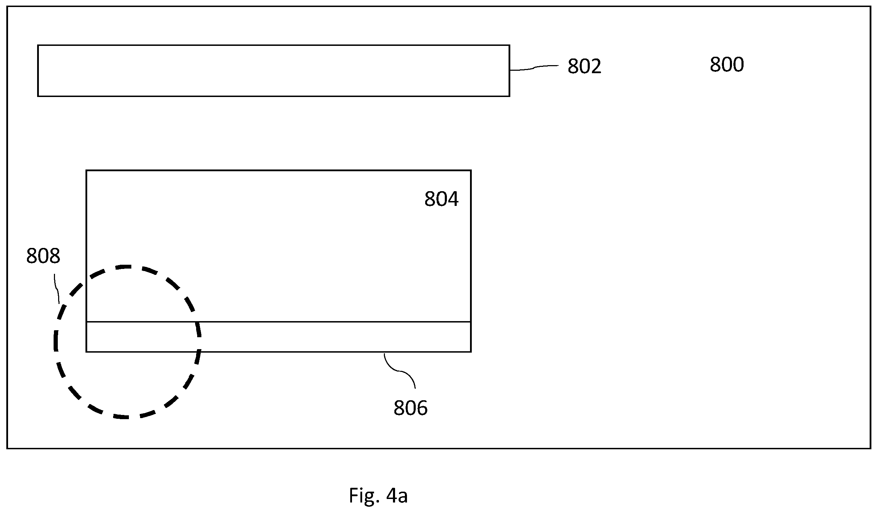

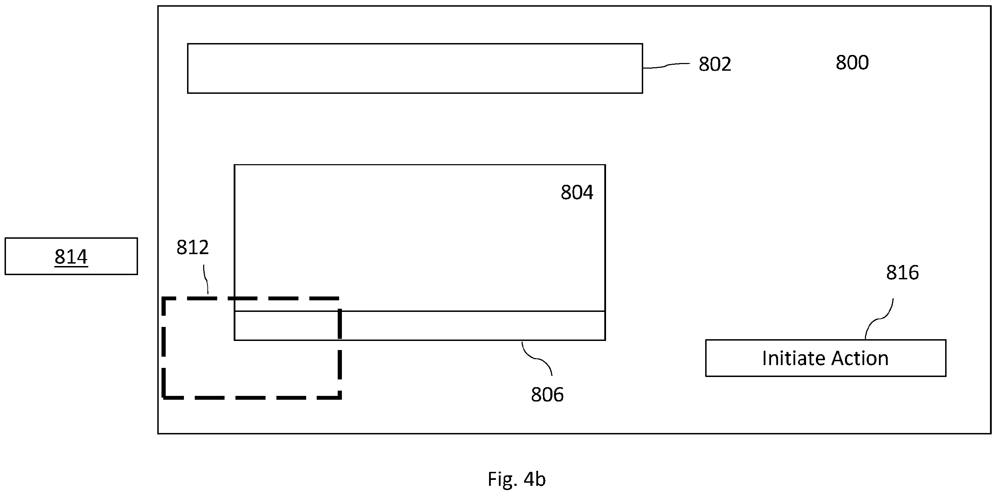

Having trained the data model to identify the presence of features of interest which are associate with fault types, we can now describe how a fault type can be diagnosed based on an image provided to the data model. This will now be described with reference to Figure 4. This will be discussed using an example of discolouration on a wall of a building. Discolouration can be identified as a feature of interest and used to diagnose a fault, as will now be described.. This example is not intended to be limiting but merely illustrate the workings of the image processing resource 104. We will show that the training enables the convolutional neural network provided by the fault identification neural network module 106 can be used to diagnose a fault in a building.

In a step S400, an inhabitant of dwelling (who has a user profile registered on the system 100) captures an image of a wall with a gutter at least partially along the wall. The image is illustrated in Figure 4a where the gutter 802 is attached to the wall 800. The image is captured by a camera on a mobile telephone (but can be captured on any other suitable mobile computing device). There is a window 804 beneath the gutter with a wooden sill 806.There is a region of discolouration 808 in the vicinity of the wooden sill 806. This is causing concern to the individual capturing the image. The discolouration is causing brown stains on the wall 800 and is due to water staining due to leakage from around the window sill. This issue is unbeknown to the individual who has captured the image.

In a step S402, the image is provided to the imaging interface 102 which converts the image into a format which is suitable for processing by the fault identification neural network module 106, i.e. a matrix of pixel values is generated using the captured image and this is used in the subsequent processing. The imaging interface 102 will also be configured to receive metadata associated with the image. The metadata associated with the image may comprise the time the image was taken, global positioning system (GPS) data, and resolution of the image. If the resolution of the image is below a resolution threshold, then the image may be rejected at this stage as not being of sufficient quality. Additionally or alternatively, the image may be converted to a higher or lower resolution format.

Additionally, the fault identification neural network module 106 may apply validation and verification to the received image.

Validation may be achieved simply by only accepting file types which are typically used for an image such as .png or .jpeg file types. Further validation may also be applied by applying a validation procedure which checks that the image is of a building. This may be applying standard image segmentation techniques to the image to determine the presence of features typically found in a building. For example, the image segmentation techniques may determine the shape of a building is present in the image. In another example, the image segmentation techniques may determine the presence of another object such as a photograph hanging on a wall. If the validation fails then the fault identification neural network identification module 106 may request another photograph.

Validation may also be achieved by contacting the user on another communication channel to ask them to capture another image of the building in question or even just to ask if they had intended to upload the image.

Image verification may be implemented by running a consistency check on the images EXIF data to determine when and where it was made. It the check determines the image was actually generated many years ago then this check will fail as it is clearly not an up to date photograph of the building. Other standard techniques can also be used. In the event a verification check fails, another image may be requested.

By validating and verifying an uploaded image, the fault identification neural network module can avoid being clogged up by malicious third parties who want to occupy the resources of the image processing resource 104 with spurious images.

When the image has been received and converted into a format suitable for processing by the convolutional layer, we can then initialise the fault identification neural network module 106 so that it can be used in an implementation phase to determine the presence of fault types in buildings based on images captured of those buildings. That is to say, the trained convolutional neural network provided by the fault identification neural network module 106 is used to diagnose the presence of faults based on the determined presence of features of interest in the captured image.

The image processing resource 104 will then initialise the convolutional neural network which is provided by the fault identification neural network 106 . This is step S404.

In a step S406, the convolutional layer 110 of the convolutional neural network (in the fault identification neural network module 106) applies a Red Green Blue (RGB) feature map to the matrix of pixel values is generated from the image The output from the RGB feature map generates a numerical representation of the image in the form of a matrix wherein each element of the matrix corresponds to a subset of the pixels of the captured image. The pooling layer 112, in a step S408, then applies a max pooling function which takes the maximum element of each matrix generated by the feature map. By taking the maximum of each matrix, the max pooling function will identify the element of the matrix with the largest value and return the value of that element with an identifier of the element. This means that groups of pixels which contain the darker red (or brown due to water staining) will be returned from the max pooling function as they will contribute the largest amounts to the matrix generated by the feature map. This is because the kernel matrix used in the convolution layer 112 comprises elements which are optimised to provide a larger value if the subject image comprises discolouration. Steps S406 and S408 are repeated for each of the convolutional and pooling layers in the convolutional neural network implemented by the fault identification neural network module 106. That is to say, the discolouration will be identified as a feature of interest in the image as the convolutional and pooling layers are configured so that the discoloured region in the captured image provides a larger value to the subsequent processing.

The repeated convolutional and pooling layers generates a dataset where the data corresponds to the features in the image such as the window, the window sill, the gutter and the discolouration.

The dataset is then provided to the fully connected layer which comprises a multi-layer perceptron where each layer in the multi-layer perceptron is connected by a series of weights and biases. The weights and biases are optimised during the training process to identify features corresponding to those which were labelled during the training process. Discolouration was identified as a label when an input image containing discolouration was used in the training process and an output was designated as water damage. The fully connected layer provides an output probability of more than 90% that a window sill and a window is present and a region of water damage is present as it is trained to associate discolouration with water damage during the training process. This is step S410.

That is to say, the convolutional neural network is trained to identify a region of water damage as an output which is associated with the label "discolouration". This is because the convolutional neural network is trained by labelling discolouration and identifying water damage as a fault type which is associated with discolouration. In another example of a fault type, a clogged gutter may be associated with a deformed gutter as a feature of interest. This will enable the convolutional neural network to receive an image of a building which captures a swollen or bowing gutter and then associate that with a clogged gutter. The clogged gutter can then be diagnosed without the need for preliminary examination or without the risk of the resident hurting themselves by investigating themselves.

That is to say, in more general terms, if content is uploaded which contains a characteristic which corresponds to a feature of interest, then this can be used to diagnose a fault type in the building as the CNN is trained to associate the feature of interest with the fault type.

This output from the fully connected layer generates metadata which contains the data identifying the presence of a window sill, a window and water damage in the captured image. The metadata also contains the positional data corresponding to these features on the captured image.

The fault identification neural network module 106 then determines, using the positional data, the proximity of the discolouration to the window sill. The positional data indicates the discolouration is close to the window sill by determining the distance of the discoloured region to the window sill.

That is to say, once the output has been obtained from the fully connected layer, a further processing step may be applied which determines the position of the features of interest in the image and whether, for example, the fault type is near to any of the features. This can then be used to diagnose the problem.

In step S412, the fault identification neural network module 106 generates a fault metadata notification. The fault metadata notification is generated using a chatbot (or other natural language generation tool) which is configured to aggregate the information returned from the convolutional neural network implemented by the fault identification neural network module 106 to generate a phrase which is included in the notification. The phrase may read "There is likely to be water damage around the window sill. This may be included in a textbox 814 near to the location of the water damage. " This is because the processing of the output from the fully connected layer determines that the water damage is near to the window sill. In another example, the processing may determine the water damage is beneath the gutter and a different inference may be determined. In this instance, the chatbot may generate the phrase "It is likely you have a clogged gutter as there is discolouration beneath your gutter". The fault metadata notification can then be stored or recorded in a time line associated with the user profile by appending the notification as an entry to the time line. The captured image may also be included in the time line entry.

A notification may then be generated which is then transmitted to the user's computing device with the captured image. The transmission of the notification is implemented using any suitable telecommunication medium such as, for example, email, SMS or notification through a suitably installed application. The region identified as likely to contain the water damage is then delineated using a suitable indicator, such as a dotted line 812, on the returned image. A button 816 is then provided on the user interface to enable the user to initiate action.

The fault notification may be stored as an entry on a timeline and the accompanying metadata used to identify a maintenance plan to address the water staining. Alternatively or additionally, the notification generation module 116 may access external data related to occupancy, location, build data, construction type, construction materials, building element life cycle/life expectancy, current condition of building elements, current building failures, expected building failures. This enables a maintenance plan to be built by utilising an expert Al system trained on faults with buildings. That is to say, the knowledge base contains knowledge about building faults and failures. The expert system is configured to access the occupancy, location, build data, construction type, construction materials, building element life cycle/life expectancy, current condition of building elements, current building failures and expected building failures. In the example of water staining near to a window, it recommends either contacting a brickwork specialist or a series of steps to remove the water staining. This is provided through the user interface 800. By accessing the external data, the expert system may determine, for example, that the building is derelict and may present danger to a brickwork specialist. This determination can then be provided as a message through the user interface 800 as a warning about the condition of the building. The recommendations provided through the expert system may be provided through the user interface. The recommendations may additionally provide the name of a brickwork specialist with contact details and a selectable link to enable contact to be initiated.

The recommendation can then be recorded on a timeline associated with the user profile. The captured image is also recorded in addition to the problem diagnosed by the fault identification neural network module 106.

That is to say, the timeline comprises a series of entries which function as cards detailing the maintenance which has been undertaken or recommended for the property. This may also enable cost-benefit analysis to be performed on each task in the timeline to reduce the risk of loss and property value depreciation.

Additionally or alternatively, the fault metadata notification may then be then converted into a query by the fault identification neural network module 106, i.e. "how do I fix water damage near to a window", and fed to the query enhancement engine (QEE) 502 in a step S600. Alternatively or additionally, the query may be structured in a more computer friendly format such as <problem = "water damage"; location "<x, y coordinates>". In another embodiment, the query, e.g "how do I fix water damage..." may be provided directly by a user through a chat interface, i.e. without capturing an image. The chat interface may be provided on user interface 800. The query is then also fed to the QEE in step S600. Alternatively or additionally, a photograph or video may be provided to the user interface 800 and processed using the system 100 as detailed above to identify a problem leading to a query which is then fed to the QEE in step 600.

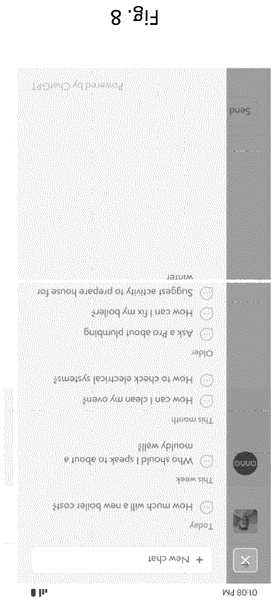

Alternatively or additionally, the chat interface on user interface 800 may present a list of commonly asked questions (see Figure 8) which can then be presented as the query to the QEE in step S600. These commonly asked questions may be generated based on location information and/or environment information about the building and/or the user, e.g. the weather may indicate that heavy rainfall is imminent and a user with a history of room problems is then likely to need to provide queries about roof problems again. The commonly asked questions may be generated based on the user's interaction history. The commonly asked questions may be generated by news sources. If the information about the building indicates the building has wooden windows, the questions may relate to the wooden windows e.g. do you want to replace your wooden windows. The generated questions may be based on live data. For example, if live weather data indicates bad weather conditions such as snow, a question "What is the most efficient way to remove snow?" may be generated or even "Where can I buy salt?"

By providing these questions, the probability of erroneous input is reduced and the probability of the correct output being generated is increased.

Alternatively or additionally, the system may monitor internet-of-things (IoT) devices around the home to determine conditions around the home and the generated questions may be based on the readings received from the loT devices. For example, if an loT humidity monitor indicates damp is likely, a question "How do I address damp" may be generated. This may then be fed as the query to the QEE in step S600.

The QEE 502 accesses the field relating to the property in the property database and also accesses the fault metadata for the previous entries in the associated time line. The QEE 502 also accesses publically available third party information relating to the property to obtain data such as the energy performance (EPC) rating. The QEE also accesses APIs for maintenance guidelines, real estate databases, weather information and other real-estate centred information. This provides an integration of diverse data sources (in this example related to real-estate) which provides a comprehensive context base for the QEE 502. This is step S602. In this instance, diverse data sources means data from distinct sources.

The integration of the diverse data sources is used to generate an enhanced, contextual prompt for a large language model (of which OpenAl's ChatGPT is an example). For instance, in the above example, accessing the property database may indicate that the property is occupied and the user profile may indicate that the user is away from the property between specific hours in the course of the day. The property database may also contain further information relating to the building's size, location, type or age. Accessing the property database may also indicate that the property is in a specific location (e.g. Lisvane in Cardiff). Accessing weather information may indicate there has been heavy snowfall recently in the vicinity of the property, which indicates an additional hazard which may be present. Accessing the property information may indicate the window pane in question is made from obscured glass rather than standard float glass, for example. The property information may also indicate that the window sill is made from wood.

The QEE may utilise the diverse data sources in a step S604 to generate an enhanced prompt such as, for example, rather than "how do I fix water damage near to a window" the prompt may be enhanced to be something more akin to "Please identify a specialist in obscured glass windows who is available outside of the hours of 9-5 and who can fix water damage and is located in Lisvane, Cardiff?" or alternatively the QEE may generate a prompt which reads "Please identify a specialist in water damaged brickwork who is available outside of the hours of 9-5 who is content to work in the snow and is located near to Lisvane, Cardiff"

That is to say, the initial query from the user profile is enhanced by other, distinct data sources to include the material need of the user, the type of professional they may need and any other relevant information.

The enhanced prompt is then transmitted to the Large Language Model (LLM) 504 in a step S606. The may comprise a call to an application programming interface necessary to access the LLM. One example of an LLM may be ChatGPT but other examples are LLaMA from Meta and PaLM2 from Google. It is also within this disclosure that the LLM may be trained, using a large dataset which is focused on a technical sector such as, for example, real estate to provide outputs which are focused on a technical sector. Suitable training techniques for training such focused LLMs may be autoregressive and masked approaches based on the relevant dataset.

That is to say, the query provided by the user is pre-processed and enhanced with additional information related to building type, maintenance history, existing issues, location, expertise of user and the level of affordability.

In other words, the question which is input via the user interface by the user is not the prompt which is provided to the LLM. The LLM receives an enhanced prompt which contains key information about the user and their home. This may be described as an augmentation of the user input to ensure it is specific to the location and environment around the building. Alternatively or additionally, the system may access user information to determine whether a user is confident in performing DIY or not. Alternatively or additionally, the system may access user information to determine whether they have professional competence with household matters, e.g. are they CORGI registered?

The LLM 504 then provides an output such as, for example, "A suitable professional is a brickwork specialist who specialises in external brickwork. They can be found in the Cardiff area. You may want to clear the snow around the area underneath the water staining to remove the hazard as a brickwork specialist is likely to need to use a ladder and this may be dangerous in the icy conditions" This is in step S608. In more general terms, the LLM, being trained on a specific technical context, generates a response which is based on specific hazards and concerns which arise around water staining and particularly working in difficult environmental conditions. This output may be provided as an output on a user interface provided on the computing device used to upload the captured image or even the computing device to which the notification was sent in step S412.

That is to say, the LLM processes the input content to create a specific response, get product and tool recommendations, pricing information and expert recommendations.

The Response Enhancement Engine (REE) 506 then generates an enhancement to this response in a step S610. The REE is configured to access third party information which can supplement the response. This third party information may include third parties with particular specialisms and impact scores for health, safety, cost and home appreciation among others. The enhancement is then transmitted to the computing device as a further notification in a step S612. That is to say, an enhanced response to the query is provided to the user who captured the image which contained the image of the water damaged brickwork. In this example, the enhancement may include the contact details for a local brickwork specialist. The REE may additionally access environmental and weather information for the location. This may, for example, enable the determination that warmer weather may be in the near future and the REE may provide the enhancement which says that the user may wish to delay for a couple of days to remove the hazard caused by the snow and ice.

By providing an enhanced response, the reliability problems with ChatGPT and other generative Al can be addressed by overlaying location, environmental and third party information onto the response. This makes the output more trustworthy and verifiable when it is being used.

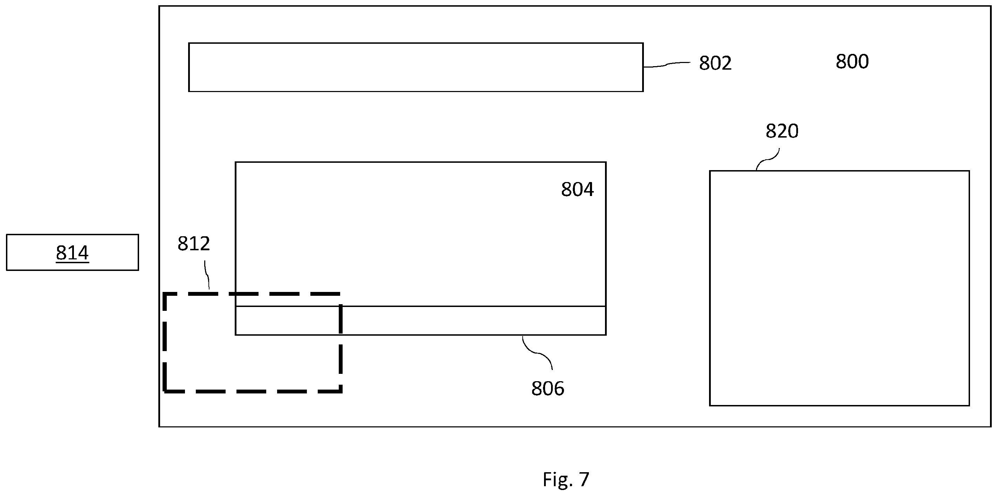

The enhanced response may be provided as part of a dialogue box 820 on the user interface 800. This is shown in Figure 7.

Alternatively or additionally, the REE 506 may access an API for a search engine or a tradeperson website such as "Checkatrade.com" and the search terms corresponding to the issue, i.e. brickwork specialist, provided to enable the search results to be retrieved.

Additionally or alternatively, the REE 506 may also format the response into a structured output including Javascript Object Notation (JSON) format or Extensible Markup Language (XML). This enables the response to be provided to the user in a structured format. This means the components of the response can be separated and provided to the user in a more easily consumable manner. That is, the formatting may provide the response as a list of items which each need to be consumed by the user:
"You need to speak with a brickwork specialist who specialises in external brickwork.

A local brickwork specialist is Joe Bloggs who is located in Llandaff, Cardiff and can be contacted on joebloggs@email.com

You may want to clear the snow around the area underneath the water staining to remove the hazard as a brickwork specialist is likely to need to use a ladder and this may be dangerous in the icy conditions. Alternatively, the weather is scheduled to improve in the coming days so you may wish to delay calling the brickwork specialist whilst the snow and ice melt. "

The REE 506 may additionally provide a selectable link which enables communication with Joe Bloggs to be initiated using any suitable means. Selection of this link may cause a message to be transmitted to Joe Bloggs or it may open a dialogue box to enable the user to craft their own message to Joe Bloggs.

That is to say, the response is also enhanced by data which is specific to the property and its location and this is achieved by accessing live data which can be used to provide additional context to the response to make them more precise and personalised. Also, providing a means to initiate immediate contact with the tradesperson saves time and reduces interactions with the user interface 800.

In other words, the response is enhanced and converted into a data structure which may be displayed as a task list, instructions, product recommendations and third party recommendations. These are specific to the user and their home. The REE provides an augmentation of the response content in that it adds a layer of location and environment-based processing to ensure the response is location and environment specific.

The enhancement of the response may be further augmented using transfer learning in that similar problems can be addressed in similar ways. If a user has reported that a response strategy has not worked particular well but that a further action has addressed the problem, this may also be provided in the enhanced response. That is to say, the information about the building and the response content may be used in future response content.

More generally, that is to say that the prompt and the response are enhanced by the use of live, real-time data relating to the location and surrounding environment around the property. This is utilised by the large language model and the REE 506 to ensure the responses provided by the image processing resource 104 are personalised, accurate and enable the identification of problems with buildings and then for relevant personnel to be contacted.

In other words, the output from the LLM is post-processed to create an enhanced response to the input provided by the user. It is displayed in a structured and organised manner, along with specific step-by-step tasks and links to products.

Additionally or alternatively, the LLM may return a result which details steps which can be taken immediately to address the problem with the property. The formatting of the response by the REE 506 may comprise setting out these steps on the user interface 800 by separating them on a line by line basis.

Additionally or alternatively, if the LLM 504 returns a result which indicates a specific type of material will be required, the REE 506 will provide a link to a website where that material can be procured.

Alternatively or additionally, if the LLM 504 returns a result which indicates emergency action is required, contact with a third party may be automatically initiated. The LLM 504 may indicate the need to switch off a device, such as an loT gas valve. The REE may then transmit a message to the loT gas valve with a command for it to be switched off.

The output from the REE 506 is then recorded on the user profile either in the same entry as or in addition to the entry which described the output from the fault identification neural network module 106. This means there is a record of the maintenance which is conducted on or suggested for the building. A suitable data structure may be utilised to record and store the output.

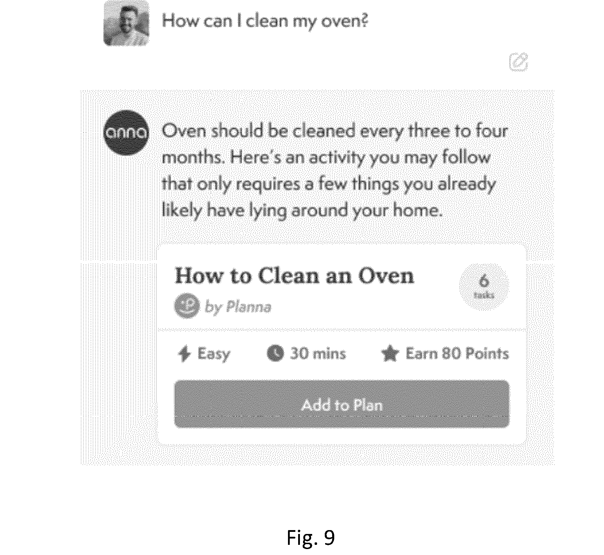

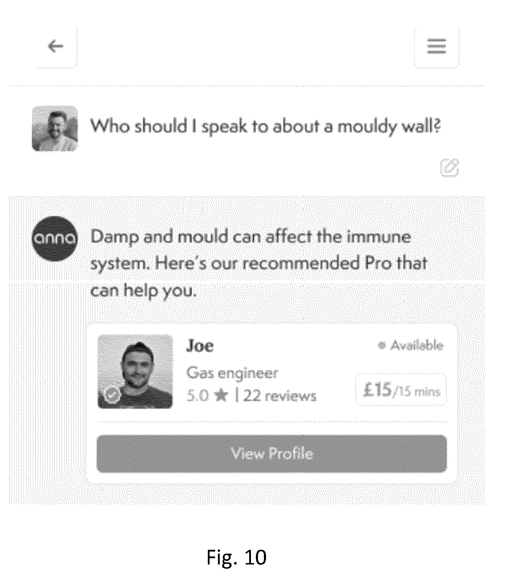

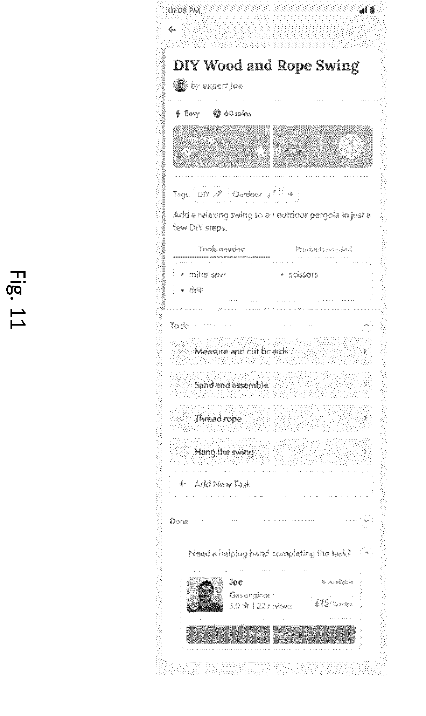

An example of enhanced output from the question "How to clean an oven" is shown in Figure 9. Another example of enhanced output from the question "Who should I speak to about a mouldy wall" is shown in Figure 10. He it shows that a professional Joe is recommended. This professional is local (which can be determined based on the location information about the property). Further content may be provided from Joe - this is shown in Figure 11.

Additionally or alternatively, when the work has been conducted on the property, a second image may be captured and input to a validation neural network which is trained to identify differences between images. The absence of the water staining is identified by the neural network which returns a probability that the feature is absent.

In summary, the system provides for query handling within a specific context and utilising external third party data sources. The output from the system is more personalised and contextual and can be formatted in structured data.

The user-to-AI interaction is enhanced to create a more personalised, relevant and engaging user experience in a specific context, which in this example is real-estate management, maintenance and improvement. An LLM and REE are used to provide enhanced responses.

By providing enhanced responses, the necessity for further input is entirely reduced as further searches and inputs are not needed to drill down to the correct input. That is, there would be no need for the user to refine their generic question to one which is specific to, say, their boiler as the system would have already incorporated this information into the query provided to the LLM.

Alternatively or additionally, the system may use the prompt provided to the LLM to regenerate the query at a frequency specified by the system or user. The responses may then be provided as notifications to the user which contain updates.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as whole. In the present specification, "comprises" means "includes or consists of" and "comprising" means "including or consisting of". The singular reference of an element does not exclude the plural reference of such elements and vice-versa. The invention may be implemented by means of hardware comprising several distinct elements, and by means of a suitable programmed computer. In a device claim enumerating several means, several these means may be embodied by one and the same item of hardware. The mere fact that certain measures are recited in mutually different dependent claims does not indicate that a combination of these measures cannot be used to advantage.

## Claims

1. A computer-implemented method of obtaining content to be associated with a user profile associated with at least one user, the method implemented by a processing resource, the method comprising:
receiving (S600) input via a user interface, the input comprising input content associated with a building;
**characterised in that** the method comprises:
retrieving (S602) information associated with the building and the user, wherein the information associated with the building comprises information associated with the surrounding location and environment of the building;
augmenting (S604) the input content associated with the building with the information associated with the building and the user, using the augmented input content to generate a prompt representing the input content;
providing (S606) the prompt to a trained model to generate response content;
augmenting (S608) the response content with externally sourced information related to the response content to generate augmented response content;
associating (S610) the augmented response content with the user profile associated with the user.

2. The method of Claim 1, wherein the augmented response content is stored in a data structure in association with the user profile.

3. The method of Claim 2, wherein the data structure comprises a JSON object or file.

4. The method of any preceding claim, the method further comprising:
- formatting the augmented response content for display on a computing device;
- displaying the augmented response content on a computing device.

5. The method of any proceeding claim wherein augmenting the response content comprises retrieving contact details for a third party.

6. The method of any preceding claim, wherein the method further comprises:
determining, from a feed of data associated with the environment and location of the building, a change in the conditions around the building;
generating an alert based on the change in conditions;
transmitting the alert to a computing device.

7. The method of any preceding claim, wherein the input comprises text content.

8. The method of Claim 7, wherein the text content is determined based on multimedia input.

9. The method of Claim 7, wherein the text content is generated based on audio input received through a computing device, wherein the audio input is converted to a phrase and the text content comprises the phrase.

10. The method of any preceding claim, wherein receiving input comprises selection of a query phrase from a plurality of query phrases provided via the user interface.

11. The method of Claim 10, wherein the plurality of query phrases are automatically generated based on previous user interaction.

12. The method of any preceding claim, wherein the information associated with the building comprises information relating to at least one of: the building type; previous maintenance history; location information.

13. The method of any preceding claim, wherein the information associated with the user comprises information relating to at least one of: demographic information, expertise of the user and indicate levels of affordability.

14. The method of any preceding claim, wherein the augmentation of the response content is based on information about the building and/or the user.

15. The method of any preceding claim, wherein the method further comprises generating and transmitting a command to an Internet-of-Things device based on the augmented response content.

## Patentansprüche

1. Computerimplementiertes Verfahren zum Erhalten von Inhalten, die mit einem Benutzerprofil verbunden werden sollen, das mit mindestens einem Benutzer verbunden ist, das Verfahren umfassend:
Empfangen (S600) einer Eingabe über eine Benutzerschnittstelle, wobei die Eingabe einen Eingabeinhalt umfasst, der mit einem Gebäude verbunden ist;
**dadurch gekennzeichnet, dass** das Verfahren umfasst:
Abrufen (S602) von Informationen, die mit dem Gebäude und dem Benutzer verbunden sind, wobei die mit dem Gebäude verbundenen Informationen Informationen umfassen, die mit dem umgebenden Standort und der Umgebung des Gebäudes verbunden sind;
Erweitern (S604) des mit dem Gebäude verbundenen Eingabeinhalts mit den mit dem Gebäude und dem Benutzer verbundenen Informationen, Verwenden des erweiterten Eingabeinhalts, um eine Aufforderung zu erzeugen, die den Eingabeinhalt darstellt;
Bereitstellen (S606) der Aufforderung an ein trainiertes Modell, um einen Antwortinhalt zu erzeugen;
Erweitern (S608) des Antwortinhalts mit extern bezogenen Informationen, die sich auf den Antwortinhalt beziehen, um einen erweiterten Antwortinhalt zu erzeugen;
Verbinden (S610) des erweiterten Antwortinhalts mit dem Benutzerprofil, das mit dem Benutzer verbunden ist.

2. Verfahren nach Anspruch 1, wobei der erweiterte Antwortinhalt in einer Datenstruktur in Verbindung mit dem Benutzerprofil gespeichert wird.

3. Verfahren nach Anspruch 2, wobei die Datenstruktur ein JSON-Objekt oder eine JSON-Datei umfasst.

4. Verfahren nach einem der vorstehenden Ansprüche, das Verfahren ferner umfassend:
- Formatieren des erweiterten Antwortinhalts zur Anzeige auf einem Computergerät;
- Anzeigen des erweiterten Antwortinhalts auf einem Computergerät.

5. Verfahren nach einem der vorstehenden Ansprüche, wobei das Erweitern des Antwortinhalts das Abrufen von Kontaktdaten für einen Dritten umfasst.

6. Verfahren nach einem der vorstehenden Ansprüche, wobei das Verfahren ferner umfasst:
Bestimmen einer Änderung der Bedingungen um das Gebäude herum anhand eines Datenstroms, der mit der Umgebung und dem Standort des Gebäudes verbunden ist;
Erzeugen einer Warnmeldung basierend auf der Änderung der Bedingungen;
Übertragen der Warnmeldung an ein Computergerät.

7. Verfahren nach einem der vorstehenden Ansprüche, wobei die Eingabe Textinhalt umfasst.

8. Verfahren nach Anspruch 7, wobei der Textinhalt basierend auf einer Multimedia-Eingabe bestimmt wird.

9. Verfahren nach Anspruch 7, wobei der Textinhalt basierend auf einer über ein Computergerät empfangenen Audioeingabe erzeugt wird, wobei die Audioeingabe in eine Phrase umgewandelt wird und der Textinhalt die Phrase umfasst.

10. Verfahren nach einem der vorstehenden Ansprüche, wobei das Empfangen der Eingabe die Auswahl einer Suchphrase aus einer Vielzahl von Suchphrasen umfasst, die über die Benutzerschnittstelle bereitgestellt werden.

11. Verfahren nach Anspruch 10, wobei die Vielzahl von Suchphrasen automatisch basierend auf früheren Benutzerinteraktionen erzeugt wird.

12. Verfahren nach einem der vorstehenden Ansprüche, wobei die mit dem Gebäude verbundenen Informationen Informationen umfassen, die sich auf mindestens eines der Folgenden beziehen: den Gebäudetyp, den bisherigen Wartungsverlauf; Standortinformationen.

13. Verfahren nach einem der vorstehenden Ansprüche, wobei die mit dem Benutzer verbundenen Informationen Informationen umfassen, die sich auf mindestens eines der Folgenden beziehen: demografische Informationen, Fachwissen des Benutzers und Angabe der Erschwinglichkeit.

14. Verfahren nach einem der vorstehenden Ansprüche, wobei die Erweiterung des Antwortinhalts auf Informationen über das Gebäude und/oder den Benutzer basiert.

15. Verfahren nach einem der vorstehenden Ansprüche, wobei das Verfahren ferner das Erzeugen und Übertragen eines Befehls an ein Internet-der-Dinge-Gerät basierend auf dem erweiterten Antwortinhalt umfasst.

## Revendications

1. Procédé mis en œuvre par ordinateur permettant d'obtenir un contenu à associer à un profil d'utilisateur associé à au moins un utilisateur, le procédé étant mis en œuvre par une ressource de traitement, le procédé comprenant :
la réception (S600) de données par l'intermédiaire d'une interface utilisateur, les données comprenant un contenu de données associé à un bâtiment ;
**caractérisé en ce que** le procédé comprend :
la récupération (S602) d'informations associées au bâtiment et à l'utilisateur, les informations associées au bâtiment comprenant les informations associées à l'emplacement avoisinant et à l'environnement du bâtiment ;
l'enrichissement (S604) du contenu de données associé au bâtiment avec les informations associées au bâtiment et à l'utilisateur, à l'aide du contenu de données enrichi pour générer une invite représentant le contenu de données ;
la transmission (S606) de l'invite à un modèle entraîné pour générer le contenu de réponse ;
l'enrichissement (S608) du contenu de réponse avec des informations d'origine externe liées au contenu de réponse afin de générer un contenu de réponse enrichi ;
l'association (S610) du contenu de réponse enrichi au profil d'utilisateur associé à l'utilisateur.

2. Procédé selon la revendication 1, dans lequel le contenu de réponse enrichi est stocké dans une structure de données en association avec le profil d'utilisateur.

3. Procédé selon la revendication 2, dans lequel la structure de données comprend un objet ou fichier JSON.

4. Procédé selon une quelconque revendication précédente, le procédé comprenant en outre :
- le formatage du contenu de réponse enrichi pour l'afficher sur un dispositif informatique ;
- l'affichage du contenu de réponse enrichi sur un dispositif informatique.

5. Procédé selon une quelconque revendication précédente dans lequel l'enrichissement du contenu de réponse comprend la récupération des coordonnées d'un tiers.

6. Procédé selon une quelconque revendication précédente, dans lequel le procédé comprend en outre :
la détermination, à partir d'un flux de données associées à l'environnement et à l'emplacement du bâtiment, d'un changement des conditions autour du bâtiment ;
la génération d'une alerte sur la base du changement des conditions ;
la transmission de l'alerte à un dispositif informatique.

7. Procédé selon une quelconque revendication précédente, dans lequel les données comprennent un contenu textuel.

8. Procédé selon la revendication 7, dans lequel le contenu textuel est déterminé sur la base de données multimédia.

9. Procédé selon la revendication 7, dans lequel le contenu textuel est généré sur la base de données audio reçues par un dispositif informatique, les données audio étant converties en une phrase et le contenu textuel comprenant la phrase.

10. Procédé selon une quelconque revendication précédente, dans lequel la réception des données comprend la sélection d'une phrase d'interrogation à partir d'une pluralité de phrases d'interrogation fournies par l'intermédiaire de l'interface utilisateur.

11. Procédé selon la revendication 10, dans lequel la pluralité de phrases d'interrogation est générée automatiquement sur la base de l'interaction précédente de l'utilisateur.

12. Procédé selon une quelconque revendication précédente, dans lequel les informations associées au bâtiment comprennent des informations relatives à au moins l'un parmi : type de bâtiment ; historique de l'entretien ; informations relatives à l'emplacement.

13. Procédé selon une quelconque revendication précédente, dans lequel les informations associées à l'utilisateur comprennent des informations relatives à au moins l'un parmi : informations démographiques, expertise de l'utilisateur et indication des niveaux d'accessibilité financière.

14. Procédé selon une quelconque revendication précédente, dans lequel l'enrichissement du contenu de réponse est basé sur des informations concernant le bâtiment et/ou l'utilisateur.

15. Procédé selon une quelconque revendication précédente, dans lequel le procédé comprend en outre la génération et la transmission d'une commande à un dispositif de l'Internet des objets sur la base du contenu de réponse enrichi.
